# EUROPEAN PATENT APPLICATION

(11) **EP 2 056 436 A2**
(43) Date of publication of application: **06.05.2009**
(21) Application number: 08019090.3
(22) Date of filing: 31.10.2008
(51) Int. Cl.: H02M 3/156

(54) **Distributed power management**

(30) Priority: 01.11.2007 US 984626 P; 29.10.2008 US 260866
(71) Applicant: Broadcom Corporation, Irvine 92617 (US)
(72) Inventor: Venes, Ardie, Laguna Niguel CA 92677 (US); Wu, Jiangfeng, Aliso Viejo CA 92656 (US); Li, Tianwei, Irvine CA 92606 (US); Vorenkamp, Pieter, Laguna Niguel CA 92677 (US)
(74) Representative: Jehle, Volker Armin

(57) **Abstract**

Apparatuses, methods, and systems for effective power management distribution are provided. In an embodiment, a system for providing power to a circuit block comprises a power management unit (PMU) configured on a first substrate and an integrated circuit (IC) configured on a second substrate. The PMU includes a first regulator configured to step down an input voltage and output a first regulated voltage. The IC includes the circuit block and a second regulator configured to receive the first regulated voltage and output a second regulated voltage. The second power regulated voltage provides power to the circuit block. The first regulator is more efficient than the second regulator.

## Description

### CROSS REFERENCE TO RELATED APPLICATIONS

This application claims the benefit of U.S. Provisional Appl. No. 60/984,626, filed November 1, 2007, which is incorporated by reference herein in its entirety.

### BACKGROUND OF THE INVENTION

### Field of the Invention

The present invention relates to providing power signals to devices, such as integrated circuit devices.

### Background Art

A power management unit (PMU) can be used to control power provided to a variety of devices. For example, a PMU can be coupled to a battery and be used to provide power signals to an integrated circuit (IC) device. As IC devices often include circuit blocks having different requirements for their respective power supply signals, a PMU can be configured to output a variety of power supply signals with different properties. For example, the PMU can be configured to output low-noise power signals to be used by sensitive circuit blocks of the IC device. A PMU can also be used to manage the battery output to provide an uninterruptible power supply and to manage the recharging of the battery.

A PMU and the IC devices for which the PMU controls power functions are typically mounted onto a printed circuit board (PCB). Power signals are transmitted from the PMU to the IC devices through interconnections, e.g., circuit traces, vias, signal planes, or a combination thereof. These interconnections take up space on the PCB in terms of: (1) the pins required on the PMU and IC devices to transmit and receive the power supply signals and (2) decoupling and/or compensation capacitors coupled to the interconnections that are used to enhance the stability of the power supply signals.

Thus, what is needed are systems and methods that allow for power management to be distributed so as to satisfy the needs individual circuit blocks while efficiently using PCB space.

### BRIEF SUMMARY

Apparatuses, methods, and systems for effective power management distribution are described. In an embodiment, a system for providing power to a circuit block comprises a power management unit (PMU) configured on a first substrate and an integrated circuit (IC) configured on a second substrate. The PMU includes a first regulator configured to step down an input voltage and output a first regulated voltage. The IC includes the circuit block and a second regulator configured to receive the first regulated voltage and output a second regulated voltage. The second power regulated voltage provides power to the circuit block. The first regulator is more efficient than the second regulator.

In another embodiment, a system for providing power includes a power management unit (PMU) configured on a first substrate and an integrated circuit (IC) configured on a second substrate. The PMU includes a first regulator configured to step down an input voltage and output a first regulated voltage. The IC includes a plurality of second regulators coupled to the first regulator and a plurality of circuit blocks. Each of the second regulators is configured to receive the first regulated voltage and output a respective second regulated voltage. Each circuit block is coupled to a respective second regulator and is configured to receive a respective second regulated voltage from the respective second regulator. The first regulator is more efficient than each second regulator.
According to an aspect, a system for providing power to a circuit block comprises:
a power management unit (PMU) configured on a first substrate, comprising:
   a first regulator configured to receive an input voltage and output a first regulated voltage based on the received input voltage;
an integrated circuit (IC) configured on a second substrate, comprising:
   the circuit block; and
   a second regulator configured to receive the first regulated voltage and output a second regulated voltage;
wherein the second regulated voltage provides power to the circuit block.
Advantageously, the PMU and the IC are implemented in separate device packages.
Advantageously, the second regulator comprises a linear regulator.
Advantageously, the linear regulator is a low-dropout linear regulator.
Advantageously, the first and second substrates are mounted on a common printed circuit board.
Advantageously, the second regulator further comprises:
a capacitor having a capacitance customized based on a load of the circuit block.
Advantageously, the first regulator comprises a switching regulator.
Advantageously, the second regulated voltage has a higher signal to noise ratio than the first regulated voltage.
Advantageously, the circuit block is a phase-locked loop or an analog to digital converter.
Advantageously, the IC comprises at least one of a multimedia device, a baseband device, or a radio frequency communications device.
Advantageously, the input voltage is provided by a battery.
Advantageously, the first regulator is more efficient than the second regulator.
Advantageously, the first regulator is configured to step up the received input voltage.
Advantageously, the first regulator is configured to step down the received input voltage.
According to an aspect, a system for providing power comprises:
a power management unit (PMU) configured on a first substrate, comprising:
   a first regulator configured to receive an input voltage and output a first regulated voltage based on the received input voltage;
an integrated circuit (IC) configured on a second substrate, comprising:
   a plurality of second regulators coupled to the first regulator, wherein each of the second regulators is configured to receive the first regulated voltage and output a respective second regulated voltage;
   a plurality of circuit blocks, wherein each circuit block is coupled to a respective second regulator and is configured to receive a respective second regulated voltage from the respective second regulator;
wherein the first regulator is more efficient than each second regulator.
Advantageously, the PMU and the IC are implemented in separate device packages.
Advantageously, at least one of the second regulators comprises a linear regulator.
Advantageously, the linear regulator is a low-dropout linear regulator.
Advantageously, at least one of the second regulators comprises:
a capacitor having a capacitance customized based on a load of a respective circuit block.
Advantageously, the first regulator comprises a switching regulator.
Advantageously, at least one of the second regulated voltages has a higher signal to noise ratio than the first regulated voltage.
Advantageously, at least one of the circuit blocks comprises a phase-locked loop or an analog to digital converter.
Advantageously, the IC comprises at least one of a multimedia device, a baseband device, or a radio frequency communications device.
Advantageously, the first regulator is more efficient than each second regulator.
Advantageously, the first regulator is configured to step up the received input voltage.
Advantageously, the first regulator is configured to step down the received input voltage.

These and other advantages and features will become readily apparent in view of the following detailed description of the invention. Note that the Summary and Abstract sections may set forth one or more, but not all exemplary embodiments of the present invention as contemplated by the inventor(s).

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIGS. 1 and 2 show block diagrams of systems that include a power management unit and an integrated circuit device.

FIGS. 3 and 4 show block diagrams of systems that have distributed power management, according to embodiments of the present invention.

FIG. 5 shows a circuit diagram of a conventional linear regulator.

FIG. 6 shows a circuit diagram of a linear regulator, according to an embodiment of the present invention.

FIG. 7 shows a flowchart providing example steps for assembling a system having distributed power management, according to an embodiment of the present invention.

The present invention will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION OF THE INVENTION

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

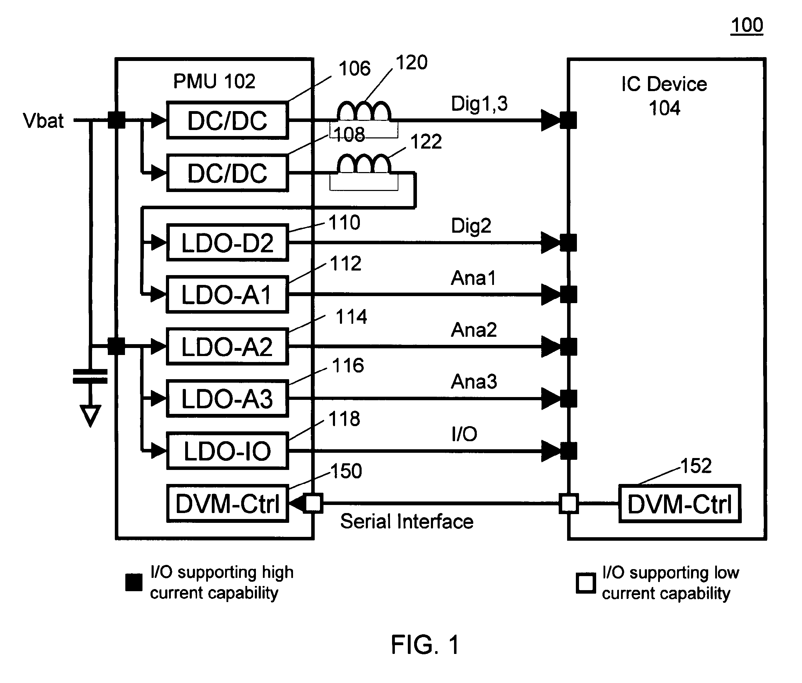

FIG. 1 shows a block diagram of a system 100 that includes a power management unit (PMU) 102 coupled to an integrated circuit (IC) device 104. IC device 104 can be system-on-a-chip that has radio frequency (RF), baseband, frequency modulated (FM), multimedia, and/or mixed-signal audio applications. In an embodiment, system 100 is included in a mobile device, e.g., cellular phone, personal digital assistant, etc.

PMU 102 includes switching regulators 106 and 108 and linear regulators 110-118. Regulators 106-118 are coupled, directly or indirectly, to a battery (not shown) and generate regulated power signals that are used to power portions of IC device 104. In an embodiment, linear regulators 110-118 can be low drop-out linear regulators. Low drop-out regulators are can operate with a relatively small difference between the voltage of an input signal, e.g., a battery signal or a signal received from a switching regulator, and a generated output signal.

In an embodiment, switching regulators 106 and 108 are DC to DC converters that step down the voltage of the signal received from the battery. As would be understood by those skilled in the art, switching regulators can step down the voltage of a power signal more efficiently, i.e., dissipating less power, than can linear regulators. The added efficiency provided by switching regulators becomes especially important when high current power signals are provided. On the other hand, linear regulators can provide power signals that have relatively low noise when compared to power signals provided by switching regulators. To provide power for a circuit block that requires a low noise power supply signal and draws significant current, a switching regulator can be cascaded with a linear regulator to provide the benefits of both the switching regulator and linear regulator. For example, the switching regulator can step down the voltage efficiently and the linear regulator can receive the stepped down voltage and output another voltage has a higher signal to noise ratio (SNR) than the SNR of the stepped down voltage output by the switching regulator. For example, in FIG. 1, switching regulator 108 is cascaded with linear regulators 110 and 112 to provide power signals to a digital and an analog circuit block of IC 104, respectively. In an embodiment, the circuit blocks coupled to linear regulators 110 and 112 are sensitive to noise in their respective power signals.

Switching regulators 106 and 108 and linear regulators 110-118 can be configured to step up or step down an input voltage. For example, switching regulator 106 can be configured to step up or step down a received battery voltage.

In another embodiment, a signal generated by a switching regulator can be used directly by a circuit block of IC device 104 without a linear regulator. For example, a power signal generated by switching regulator 106 can be received by digital circuit blocks of IC device 104 that are not as susceptible to noise as other circuit blocks of IC 104.

Linear regulators can also directly receive a power signal from the battery without the use of a switching regulator. For example, regulators 114-118 can be coupled directly to the battery. Linear regulators 114-118 can be coupled to circuit blocks in IC device 104 that do not draw significant current. Thus, the additional power dissipated by linear regulators 114-118, as compared to a switching regulator, may not be significant. For example, regulators 114 and 116 may be coupled to analog circuit blocks of IC device 104 that do not draw significant current. Similarly, the linear regulator 118 can be coupled to an input/output (I/O) circuit block of IC device 104 that does not draw significant current.

System 100 also includes inductors 120 and 122 coupled to switching regulators 106 and 108, respectively. Inductors 120 and 122 can be used to further enhance the efficiency of switching regulators 106 and 108. For example, electromagnetic fields built up in the cores of inductors 120 and 122 while switching regulators 106 and 108, respectively, are in their "on" state can be discharged when switching regulators 106 and 108, respectively are in their "off' state. Thus, an output signal is provided even when switching regulators 106 and 108 are in their "off" state.

PMU 102 optionally includes a dynamic voltage management (DVM) control module 150 coupled to a DVM control module 152 included in IC device 104. In an embodiment, DVM control module 150 is coupled to DVM control module 152 over a serial interface. DVM control module 152 can send signals to DVM control module 150 to dynamically manage the voltage of signals provided by PMU 102. In such a manner, the voltage of signals provided to circuit blocks of IC device 104 can be decreased to save power and reduce heat dissipation. For example, if it is determined that a circuit block can be powered with a signal having a lower voltage than is presently provided, DVM control module 152 can send a signal to DVM control module DVM 150 requesting the voltage of that power signal be reduced. The reduced voltage may result in decreased performance of the circuit block, but the added battery life and/or decreased heat dissipation may outweigh the decrease in performance.

In an embodiment, PMU 102 and IC device 104 are mounted onto a PCB. Each power supply signal provided by PMU 102 to IC device 104 results in at least one added interconnection between PMU 102 and IC device 104. Each of these interconnections requires one or more pins on each of PMU 102 and IC device 104 and a capacitor coupled to each interconnection. The inventors have recognized that the significant number of capacitors required due to the interconnections and the potentially increased package size of PMU 102 and/or IC device 104 caused by the power pins can take up significant space on the PCB onto which PMU 102 and IC device 104 are mounted.

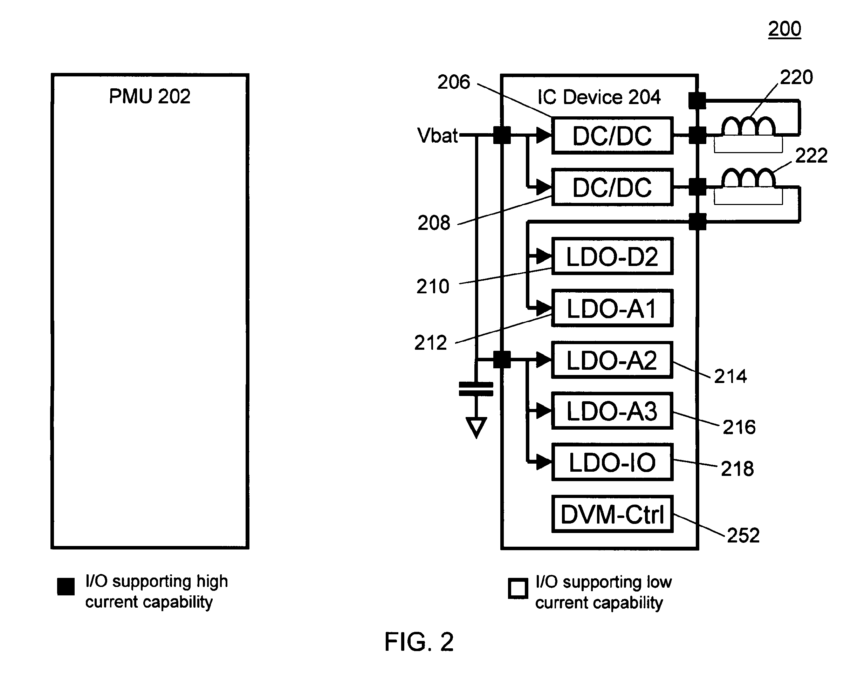

FIG. 2 shows a system 200 that includes a PMU 202 and an IC device 204. IC device 204 includes switching regulators 206 and 208 and linear regulators 210-218. Similar to IC device 104 described with reference to FIG. 1, IC device 204 can also be a system-on-a-chip that has radio frequency (RF), baseband, frequency modulated (FM), multimedia, and/or mixed-signal audio applications. In a further embodiment, IC device 204 includes all of the circuit blocks, e.g., analog, digital, RF, I/O, that IC device 104 includes. In another embodiment, switching regulators 206 and 208 and linear regulators 210-218 are substantially similar to switching regulators 106 and 108 and linear regulators 110-118, respectively, described with reference to FIG. 1.

Switching regulator 208 is cascaded with linear regulators 210 and 212 to provide power signals to a digital and an analog circuit block of IC device 204, respectively. In an embodiment, the circuit blocks coupled to linear regulators 210 and 212 are sensitive to noise in their respective power signals.

A power signal generated by switching regulator 206 is received by digital circuit blocks of IC device 204 that are not as susceptible to noise as other circuit blocks of IC 204. Linear regulators 214-218 can be coupled to circuit blocks in IC device 204 that do not draw significant current. As described above, in such an embodiment, the additional power dissipated through the use of linear regulators instead of switching regulators may not be significant. For example, linear regulators 214 and 216 may be coupled to analog circuit blocks of IC device 204 that do not draw significant current. Similarly, the linear regulator 218 can be coupled to an I/O circuit block of IC device 204 that does not draw significant current.

IC device 204 also includes a DVM control module 252. In an embodiment, DVM control module 252 is similar to DVM control module 152 described with reference to FIG. 1. However, in contrast to DVM control module 152, DVM control module 252 does not transmit signals to a corresponding DVM module of a PMU, e.g., PMU 202. Instead, DVM control module 252 dynamically adjusts the voltage of power supply signals by interacting with regulators 206-218 that are implemented in IC device 204.

System 200 also includes inductors 220 and 222. In an embodiment, inductors 220 and 220 are substantially similar to inductors 120 and 122 described with reference to FIG. 1.

Because IC device 204 includes regulators that generate power signals used by the circuit blocks of IC device 204, interconnections between PMU 202 and IC device 204 can be limited. However, in some embodiments it is advantageous to have high power regulators implemented in a PMU. For example, the manufacturing technology used to fabricate a PMU may be better suited to handle regulators that generate high power signals than manufacturing technology used to fabricate IC device 204. For example, PMU 202 may be fabricated such that it has larger line widths, e.g., approximately 0.35µm, compared to line widths of IC device 204, e.g., approximately 65nm. In an embodiment, PMU 202 has larger line widths because it controls the charging of the battery. These larger line widths are better suited to handle high current associated with high power signals. Furthermore, in most systems, a PMU cannot be completely removed. For example, the PMU may handle certain tasks that a corresponding IC device does not, e.g., battery management and/or charging of the battery.

### Exemplary Embodiments

In embodiments described herein, power management is distributed between a PMU and device(s) to be powered by signals generated by the PMU. High-power regulators, e.g., regulators that can efficiently step down high power signals, such as switching regulators, are implemented in the PMU and low-power regulators, e.g., regulators used to provide low-noise and/or low power signals, such as linear regulators, are implemented in the device(s) to be powered. The inventors have found that by distributing power management as described herein, board space on a PCB can be saved and performance can be enhanced. For example, distributed power management, as described herein, can result in fewer interconnections between the PMU and the device(s) to be powered. Fewer interconnections can lead to fewer pins required for power functions on each of the PMU and the device(s) to be powered, possibly resulting in smaller IC packages for the PMU and/or device(s). Fewer interconnections also results in a reduced number of capacitors mounted to the PCB used to provide stability for the power supply signals transmitted over the interconnections. Furthermore, according to embodiments described herein, regulators can be assembled such that a capacitor may not be needed for some interconnections. Thus, the number of external capacitors can be reduced by reducing the number of interconnections to which external capacitors are typically coupled and designing regulators such that external capacitors may not be needed some of the remaining interconnections. A reduced number of interconnections can also result in enhanced performance through a reduction in the number of connections within the PMU and/or device(s), e.g., wire bond connections in a ball grid array package, resulting in a decreased inductance. As would be appreciated by those skilled in the art, inductance may introduce noise into the system. Performance of the overall system can also be improved by providing regulators customized for individual portions circuit blocks of the device(s) so as to increase isolation between portions of circuit blocks to reduce the effects of noise and to provide greater granularity in power supply signal properties.

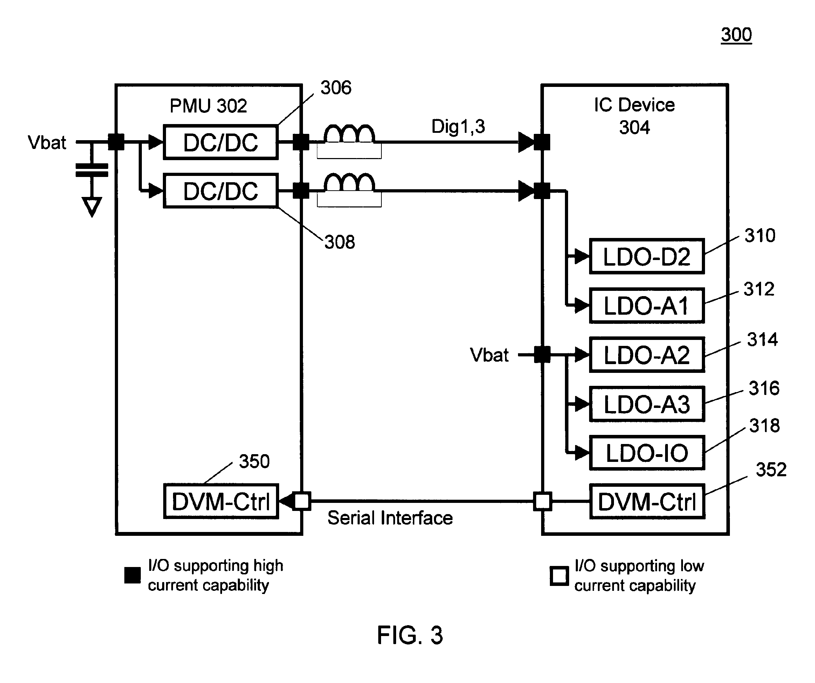

FIG. 3 shows a system 300 that has distributed power management, according to an embodiment of the present invention. System 300 includes a PMU 302 and an IC device 304. PMU 302 includes switching regulators 306 and 308. IC device 304 includes linear regulators 310-318. Similar to IC device 104 described with reference to FIG. 1, IC device 304 can also be a system-on-a-chip that has radio frequency (RF), frequency modulated (FM), baseband, multimedia, and/or mixed-signal audio applications. In an embodiment, system 300 is included in a mobile device, e.g., cellular phone, personal digital assistant, etc.

Switching regulators 306 and 308 and linear regulators 310-318 can be substantially similar to switching regulators 106 and 108 and linear regulators 110-118, respectively, described with reference to FIG. 1.

The manufacturing technology used to fabricate a PMU may be better suited to handle regulators that generate high power signals than manufacturing technology used to fabricate IC device 204. For example, PMU 202 may be fabricated such that it has larger line widths, e.g., approximately 0.35µm, compared to line widths of IC device 204, e.g., approximately 65nm. In an embodiment, PMU 202 has larger line widths because it controls the charging of the battery. These larger line widths are better suited to handle high current associated with high power signals.

As shown in FIG. 3, power management and regulation is split between PMU 302 and IC device 304. Specifically, switching regulators 306 and 308 that are configured to provide high power, e.g., high current, signals are implemented in PMU 302. Linear regulators 310 and 312 that receive signals from switching regulator 308 and linear regulators 314-318 that provide relatively low power signals, e.g., low current, are implemented in IC device 304. As shown in FIG. 3, switching regulator 306 directly powers one or more circuit blocks of IC device 304. For example, switching regulator 306 can provide power signals to digital circuit blocks of IC device 304 that can operate with relatively noisy power signals. Switching regulator 308 is cascaded with linear regulators 310 and 312 to provide low noise and relatively high power signals to digital and analog circuit blocks of IC device 304, respectively. In an embodiment, circuit blocks that receive signals from linear regulators 310 and 312 can be especially susceptible to noise. For example, these circuit blocks may include radio frequency (RF) and/or analog components. Linear regulators 314-318 are directly coupled to the battery. Similar to regulators 114-118 described with respect to FIG. 1, regulators 314-318 can be configured to provide relatively low power so that the inefficiency of linear regulators 314-318, compared to switching regulators, does not result in significant power being wasted. In an embodiment, linear regulators 314 and 316 can be used to provide power signals for analog circuit blocks of IC device 304. Linear regulator 318 can be used to provide a power signal to an I/O circuit block of IC device 304.

PMU 302 and IC device 304 also optionally include respective DVM control modules 350 and 352. DVM control module 352 can be configured to dynamically manage the voltage of signals provided by linear regulators 310-318. Furthermore, DVM control module 352 can transmit signals to DVM control module 350 of PMU 302 to adjust the voltage of power signals generated by switching regulators 306 and 308. In such a manner, DVM control module 352 of IC device 304 can optimize the voltage of power signals provided to various circuit blocks of IC device 304 to maximize the life of the battery and/or reduce heat dissipation.

By splitting the power management and regulation responsibilities as shown in FIG. 3, the number of interconnections between PMU 302 and IC device 304 can be substantially reduced, as compared to system 100 shown in FIG. 1. The reduced interconnections results in a reduction in the number of capacitors and reduces the total pin count for each of PMU 302 and IC device 304. Capacitors coupled to interconnections can take up substantial space on a PCB onto which PMU 302 and IC device 304 are mounted. By reducing the number of interconnections, the number of these capacitors can be reduced. Reducing the pin counts of PMU 302 and IC device 304 can also result in smaller packages for PMU 302 and IC device 304 and a reduced number of interconnections, e.g., wire bond connections, within each IC package. As described above, a reduced number of interconnections within the IC packages can result in a reduced inductance, and thus reduced noise. Furthermore, system 300 also retains the cost benefits of having high power switching regulators 306 and 308 implemented in PMU 302.

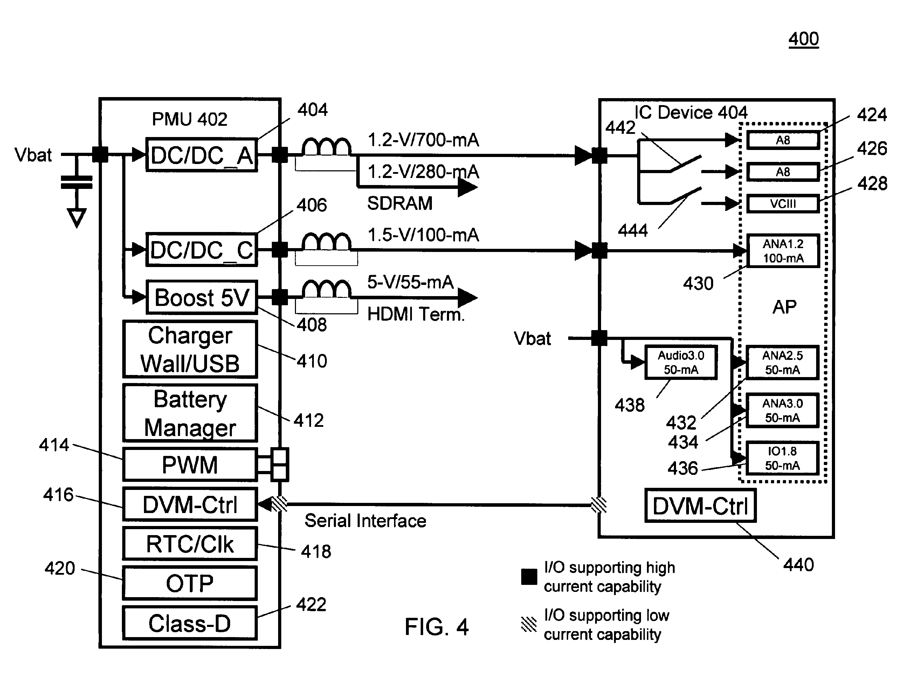

FIG. 4 shows a system 400 having distributed power management, according to an embodiment of the present invention. System 400 includes a PMU 402 and an IC device 404. PMU 402 includes switching regulators 404 and 406, 5-Volt (V) power supply 408, a wall charger/USB charger 410, a battery manager 412, a pulse width modulated (PWM) signal module 414, a DVM control module 416, a real time clock 418, a one-time programmable (OTP) memory 420, and amplifiers 422. IC device 404 includes analog circuit blocks 424 and 426, a multimedia processor 428, linear regulators 430-436, a linear regulator 438, a DVM control module 440, and switches 442 and 444.

In an embodiment, IC device 404 includes a core portion that includes example analog circuit blocks 424 and 426, a multimedia processor 428, and linear regulators 430-436. This portion of IC device 404 can provide the main features to be provided by IC device 404. Other portions of IC device 404, e.g., a circuit block coupled to linear regulator 438, can provide other non-essential or optional features of IC device 404.

Similar to system 300 shown in FIG. 3, power management and regulation in system 400 is split between PMU 402 and IC device 404. Specifically, high power regulators are implemented in PMU 402 and low power regulators are implemented in IC device 404. As shown in FIG. 4, switching regulator 404 is coupled to a 5V battery and outputs a power signal having a total current of 900 milliamperes (mA) at a voltage of 1.2 V, for example purposes. Of the total 900 mA output by switching regulator 404, 280 mA are received by an SDRAM memory module (not shown). The remaining 700 mA is received by components of IC device 404. The voltage and current values described herein are only exemplary, and not intended to limit the invention. For example, the remaining 700 mA can be split amongst analog circuit blocks 424 and 426 and multi-media processor 428. Also shown in FIG. 4, analog circuit block 426 and multi-media processor 428 are coupled to the power signal provided by switching regulator 404 through switches 442 and 444, respectively. Switches 442 and 444 can be used to deactivate analog circuit block 426 and multi-media processor 428, respectively, when they are not in use to save power. When they are deactivated, switching regulator 404 may output a signal with reduced current since analog circuit block 426 and multi-media processor 428 are no longer drawing current.

Switching regulator 406 of PMU 402 is cascaded with linear regulator 430 of IC device 404. Switching regulator 406 outputs a power signal having 100 mA at a voltage of 1.5 V. This power signal is received by linear regulator 430 which further steps down the voltage to generate a power signal that has a voltage of 1.2 V and a current of 100 mA. 5V power supply 408 outputs a signal having a current of 55 mA at a voltage of 5V to an HDMI terminal (not shown). Wall charger/USB module 410 is used to charge the battery based on a power signal received from a wall socket or a USB connection. Battery manager 412 is used to manage the output of the battery and to provide an uninterruptible power supply. PWM module 414 is used to output a PWM signal that is used to control devices of PMU 402 such as light emitting diodes (LED). Real time clock 418 is used to provide a clock signal for the operation of PMU 402. OTP memory 420 permanently stores internal settings of PMU 402 such as the settings of switching regulators 404 and 406. Amplifiers 422 are used to amplify power and/or audio signals. In a further embodiment, amplifiers 422 include class D amplifiers that are highly efficient and used for audio or power signals.

Analog circuit blocks 424 and 426 and multi-media processor 428 receive a power signal directly from switching regulator 404, i.e., without a linear regulator in between. In an embodiment, analog circuit blocks 424 and 426 and multi-media processor 428 are less susceptible to noise in their respective power supply signals than other circuit blocks of IC device 404. Linear regulator 430 is cascaded with switching regulator 406 to provide a low noise high power, e.g., high current, signal efficiently to an analog circuit block. This analog circuit block may be especially susceptible to noise in its power supply signal. Linear regulators 432-438 are coupled to the battery power signal. Each of linear regulators 432-438 provide a signal having a known current, 50 mA. As compared to the other power signals provided in system 400, 50 mA of current is relatively small, thus the inefficiency added by using a linear regulator instead of a switching regulator is not significant. For example, linear regulators 432-434 can provide power signals to analog circuit blocks at voltages of 2.5V and 3.0V, respectively. Voltage regulator 436 can provide a power signal to an I/O module at a voltage of 1.8V for example. Linear regulator 438 can provide a power signal to an audio module having a voltage of 3.0V for example. One or more of linear regulators 430-438 can be low drop out linear regulators.

DVM control modules 440 and 416 can be used to dynamically manage the voltage of power signals so as to maximize the life of the battery and/or reduce heat dissipation. For example, DVM control module 440 of IC device 404 can adjust the output voltages of regulators 430-438 based on the needs of circuit blocks coupled to each regulator. DVM control module 440 can also transmit signals to DVM control module 416 based on which DVM control module 416 can adjust the output voltages of switching regulators 404 and 406.

By splitting the power management and regulation responsibilities as shown in system 400, the benefits of having high power switching regulators implemented in PMU 402 are retained while reducing the number of interconnections between PMU 402 and IC device 404. As described above, reducing the number of interconnections between PMU 402 and IC device 404 can save space on a PCB onto which PMU 402 and IC device 404 are mounted through a reduction in the number of capacitors that have to be mounted onto the PCB and a decrease in the size of the packages of PMU 402 and IC device 404.

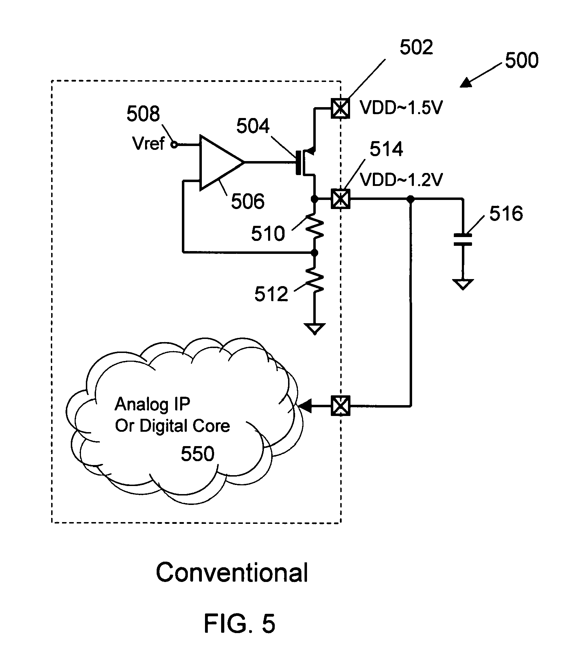

FIG. 5 shows a circuit diagram of a conventional linear regulator 500 coupled to an analog IP or digital core 550. Linear regulator 500 and core 550 are typically implemented in separate IC packages and coupled together through interconnections on a PCB. For example, linear regulator 500 can be used in one or more of linear regulators 114-118 described with respect to FIG. 1. Linear regulator 500 includes a metal oxide semiconductor field effect transistor (MOSFET) 504, an operational amplifier 506, resistors 510 and 512, and a capacitor 516. As shown in FIG. 5, a source of MOSFET 504 is coupled to a node 502 that is held at a predetermined voltage, approximately 1.5V for example. For example, MOSFET 504 may be coupled to a switching regulator that outputs a power signal having a voltage of 1.5V. Operational amplifier 506, which receives a reference voltage 508, is coupled to a gate of MOSFET 504. Resistors 510 and 512 form a voltage divider.

As would be appreciated by those skilled in the art, the feedback loop of linear regulator 500 formed by operational amplifier 506, MOSFET 504, and resistors 510 and 512 tends to hold the voltage at a node 514 at a desired value, e.g., about 1.2V. The value of the voltage at node 514 is principally determined by the values of resistors 510 and 512, the voltage received at a source 502 of MOSFET 504 and voltage reference 508 received by operational amplifier 506. In an embodiment, the values of these parameters are set so that a desired 1.2V output is obtained at node 514.

Linear regulator 500 also requires an external capacitor 516. Since the load of core 550 that is to be powered by an output of linear regulator 500 is unknown when linear regulator 500 is designed and the output of linear regulator 500 is used to power a device or circuit block 550 implemented in another IC, linear regulator 500 is designed so that its dominant pole is at node 514. Such a design provides adequate stability for a variety of loads provided by analog or digital core 550. However, such a design also requires an external capacitor. For example, the external capacitor may be coupled to an interconnection between a PMU and an IC device, e.g., PMU 302 and IC device 304 in FIG. 3. As described above, external capacitors coupled to interconnections take up significant space on a PCB. If space on the PCB is be saved, additional components could be mounted on the PCB, giving the total system added functionality. Alternatively, the saved space could be used to decrease the overall size of the PCB.

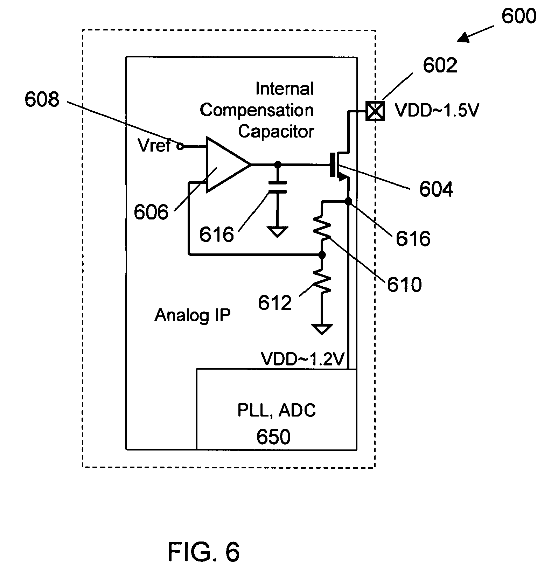

FIG. 6 shows a circuit diagram of a linear regulator 600 coupled to a circuit block 650, according to an embodiment of the present invention. Linear regulator 600 includes a MOSFET 604, and operational amplifier 606, resistors 610 and 612, and a capacitor 616. MOSFET 604, operational amplifier 606, and resistors 610 and 612 can be substantially similar to MOSFET 504, operational amplifier 506, and resistors 510 and 512, respectively, described with reference to FIG. 5 above.

In contrast to linear regulator 500 shown in FIG. 5, linear regulator 600 is used to power a specific circuit block 650. For example, circuit block 650 may be a phase locked loop (PLL) or an analog-to-digital converter (ADC). Linear regulator 600 is included within the analog or digital device. Thus, the load of circuit block 650 is known when linear regulator 600 is implemented. The inventors have found that when the load of the circuit block to be powered is known before linear regulator 600 is implemented a design for linear regulator 600 can be used that does not have to provide stability for in all types of situations. For example, the dominant pole of linear regulator 600 is no longer located at a output node 614 but rather is located at the gate of MOSFET 604. As such, an internal compensation or decoupling capacitor can be used. Thus, instead of having an external capacitor, e.g., capacitor 516 as shown in FIG. 5, linear regulator 600 has an internal capacitor. By including the capacitor within the linear regulator and not using an external capacitor significant board space on a PCB can be saved. Furthermore, since linear regulator 600 provides a power signal to specific portions of a circuit block, the properties of the power supply signals, e.g., voltage, can be customized. Thus, greater granularity in power supply signal properties can be achieved by using a regulator similar to linear regulator 600 shown in FIG. 6.

In embodiments where linear regulator 600 is used in a system that has distributed power supply management, as described above, significant space on a PCB can be saved. Specifically, the number of interconnections can be reduced and some external capacitors that would be coupled to the remaining interconnections can be eliminated.

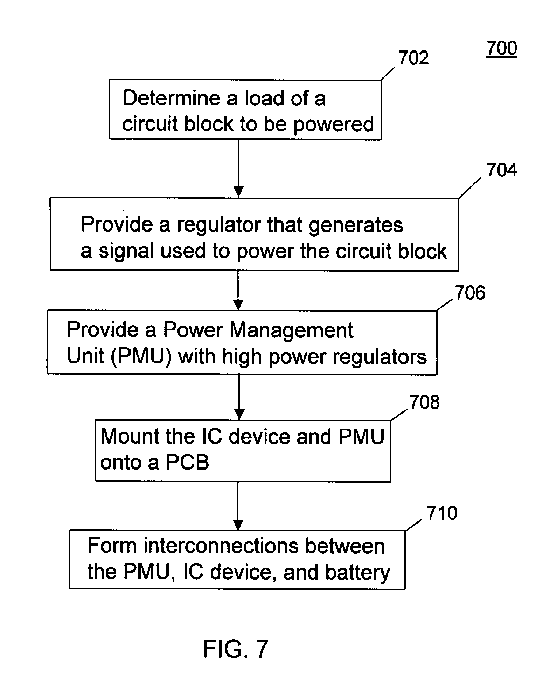

FIG. 7 shows a flow chart providing a method of assembling a system with distributed power management, according to an embodiment of the present invention. Other structural and operational embodiments will be apparent to persons skilled in the relevant art(s) based on the following discussion. The steps shown in FIG. 7 do not necessarily have to occur in the order shown. The steps of FIG. 7 are described in detail below.

Flow chart 700 begins with step 702. In step 702, a load of a circuit block to be powered is determined. For example, in FIG. 6, the load of a circuit block 650 can be determined.

In step 704, a regulator is provided that generates a signal used to power the circuit block. The regulator can include an internal capacitor that has a capacitance determined based on the load of the circuit block determined in step 702. For example, in FIG. 6, linear regulator 600 is provided that includes an internal capacitor 616 that has a capacitance determined by a load of circuit block 650.

In step 706, a power management unit is provided that includes high power regulators. For example in FIG. 3, PMU 302 that includes switching regulators 306 and 308 can be provided.

In step 708 the IC device and the PMU are mounted onto a PCB. For example, PMU 302 and IC device 304 shown in FIG. 3 can be mounted onto a PCB.

In step 710, interconnections are formed between the PMU, IC device, and battery. In an embodiment, one or more interconnections do not require a capacitor because the capacitor has been implemented within the regulators included in the IC device.

As described above, the steps of flow chart 700 do not have to occur in the order shown. For example, the order of steps 708 and 710 can be reversed. In such an embodiment, the interconnections are formed on a PCB before the IC device and PMU are mounted onto the PCB.

### Conclusion

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A system for providing power to a circuit block, comprising:
a power management unit (PMU) configured on a first substrate, comprising:
a first regulator configured to receive an input voltage and output a first regulated voltage based on the received input voltage;
an integrated circuit (IC) configured on a second substrate, comprising:
the circuit block; and
a second regulator configured to receive the first regulated voltage and output a second regulated voltage;
wherein the second regulated voltage provides power to the circuit block.

2. The system of claim 1, wherein the PMU and the IC are implemented in separate device packages.

3. The system of claim 1, wherein the second regulator comprises a linear regulator.

4. The system of claim 3, wherein the linear regulator is a low-dropout linear regulator.

5. The system of claim 3, wherein the first and second substrates are mounted on a common printed circuit board.

6. The system of claim 1, wherein the second regulator further comprises:
a capacitor having a capacitance customized based on a load of the circuit block.

7. The system of claim 1, wherein the first regulator comprises a switching regulator.

8. A system for providing power, comprising:
a power management unit (PMU) configured on a first substrate, comprising:
a first regulator configured to receive an input voltage and output a first regulated voltage based on the received input voltage;
an integrated circuit (IC) configured on a second substrate, comprising:
a plurality of second regulators coupled to the first regulator, wherein each of the second regulators is configured to receive the first regulated voltage and output a respective second regulated voltage;
a plurality of circuit blocks, wherein each circuit block is coupled to a respective second regulator and is configured to receive a respective second regulated voltage from the respective second regulator;
wherein the first regulator is more efficient than each second regulator.

9. The system of claim 8, wherein the PMU and the IC are implemented in separate device packages.

10. The system of claim 8, wherein at least one of the second regulators comprises a linear regulator.
